# EUROPEAN PATENT SPECIFICATION

(11) **EP 1 533 684 B1**
(45) Date of publication and mention of the grant of the patent: **13.08.2008**
(21) Application number: 04256974.9
(22) Date of filing: 10.11.2004
(51) Int. Cl.: G06F 3/02, G06F 15/00, G06F 1/00, H04L 29/06, H04N 1/32, H04L 9/32

(54) **Multipurpose keys employing network communications apparatus**
Netzwerkkommunikations-Einrichtung mit Mehrzwecktasten.
Appareil pour reseau de communication utilizant des touches multifunctions

(30) Priority: 13.11.2003 JP 2003383347; 05.02.2004 JP 2004028975
(43) Date of publication of application: 25.05.2005
(73) Proprietor: Ricoh Company, Ltd., Tokyo 143-8555 (JP)
(72) Inventor: Takaoka, Tatsuo, Isehara-shi, Kanagawa-ken (JP)
(74) Representative: Leeming, John Gerard

(56) References cited:
- WO-A-01/84856
- WO-A-98/06037
- US-A- 5 496 992
- US-A- 5 881 225
- US-A1- 2001 021 029

## Description

### BACKGROUND

### Field of the Invention

The present invention relates to a communications apparatus, and in particular to a communications apparatus which executes data communications via a network while allowing a user to allocate and set an operational function to a multipurpose key.

### Discussion of the Background Art

In general, a communications apparatus, such as a network facsimile, a complex machine, etc., having a network communication function to execute data communications via a network, is used by a great number of unspecified users. Then, a user authorization function is generally employed to inhibit an unauthorized user to use the communications apparatus without permission. Further, some of operations are inhibited depending upon a user type, such as a network manager, a machine manager, etc. Further, secrecy of communication documents stored in the communications apparatus is expected to improve.

Further, since the network facsimile and the complex machine generally include significantly huge number of operational functions, many operation keys are arranged on an operation display to allow a user to operate and use respective operational functions.

However, only a small number of users generally use the all of the operational functions, and there is an operational function used by only a specified user.

One possible countermeasure to resolve such problems and enhance usability is to employ a plurality of multipurpose keys, each of which receives allocation beforehand and then designation from a user of a prescribed operational function.

WO 98/06037A discloses a communication apparatus with at least two multipurpose keys each configured to designate an operation function separately and a network communication function operative to execute data communication via a network.

### SUMMARY OF THE PRESENT INVENTION

An object of the present invention is to address the above-noted problems and provide a new and novel communications apparatus including a plurality of multipurpose keys, each of which allows designation of an operational function separately allocated thereto, a network communication function that executes data communications via a network, and an authorization function selectively employed in the communications apparatus to authorize a user.

According to the invention there is provided a communications apparatus, comprising:
at least two multipurpose keys each configured to allow designation of an operational function separately allocated thereto;
apparatus comprising means for performing a network communication function operative to execute data communications via a network;
authorization means selectively employed in the communications apparatus and configured to designate an authorization function to authorize a user;
wherein the authorization means is used when employed and the user starts operating any one of the at least two multipurpose keys, and
characterized by a key definition table configure to store at least one block of key definition information defining at least two operational functions allocated to the at least two multipurpose key per a user; and
an operational means configured to perform an operation function allocated to the operated one of the multipurpose keys is specified from the key definition table based upon a user ID identified through authorization from the authorization means.

In another embodiment, a validity table is provided to include validity information per each operational function. The validity information represents that an operational function designated by a user, who has been authorized by the authorization function, either invalidated, i.e., neglected or validated depending upon a type of the operational function. In a preferred embodiment, the designated operational function is executed if a corresponding validity information is positive.

In yet another embodiment, a user type table is provided to include a plurality of availability information, each of which indicates availability per a user type, in connection with an operational function. In a preferred embodiment, an operational function allocated to an operated multipurpose key is specified from a key definition table based upon a user ID identified during the authorization, and is permitted to execute the operational function in accordance with the user type.

In yet another embodiment, a user is categorized into a general user when the user skipped the authorization. In a preferred embodiment, the key definition table includes a plurality of operational functions allocated to a plurality of multipurpose keys operated by the general user. A number of the plurality of operational functions is smaller than that used by a user having obtained the authorization.

In yet another embodiment, a network server is connected to the network and performs the authorization upon receiving a request from the communications apparatus.

In yet another embodiment, the authorization is executed one of by locally and remotely.

### BRIEF DESCRIPTION OF DRAWINGS

The invention will be more clearly understood from the following description, given by way of example only, with reference to the accompanying drawings, in which:
FIG. 1 illustrates an exemplary network communication system according to one embodiment of the present invention;
FIG. 2 illustrates an exemplary configuration of a network facsimile FX included in the network communication system of FIG. 1;
FIG. 3A illustrates various exemplary user registration information referred to when the network facsimile FX operates;
FIG. 3B illustrates an exemplary key definition table containing information used when an operational function is allocated to a corresponding multi-purpose key;
FIG. 3C illustrates an exemplary key ID table;
FIG. 4 illustrates an exemplary operation performed when a user designates and registers a prescribed functional operation through a prescribed multipurpose key;
FIG. 5 illustrates an exemplary operation executed by the network facsimile FX when a user operates a multipurpose key;
FIGS. 6A and 6B collectively illustrates an exemplary validity table containing validity information in connection with an operational function per a user;
FIG. 7 illustrates an exemplary operation executed by the network facsimile FX when a user operates a multipurpose key;
FIGS. 8A and 8B collectively illustrates an exemplary general user table containing information of one or more operational functions available to a general user;
FIG. 9 illustrates an exemplary operation executed by the network facsimile FX when a user operates a multipurpose key;
FIGS. 10A and 10B collectively illustrates an exemplary user type table containing information of one or more operational functions available to a user of a user type;
FIG. 11 illustrates an exemplary operation executed by the network facsimile FX when a user operates a multipurpose key;
FIG. 12 illustrates an exemplary network communication system according to another embodiment of the present invention;
FIG. 13 illustrates an exemplary configuration of a network facsimile Fxa included in the network communication system of FIG. 12;
FIG. 14 illustrates an exemplary configuration of an operation display section of the network facsimile FXa;
FIGS. 15A and 15B collectively illustrates an exemplary key definition table containing key definition information;
FIGS. 16 and 17 collectively illustrate an exemplary operation executed by the network facsimile FXa in a standby mode;
FIGS. 18A to 18C illustrate an exemplary standby screen, an exemplary user ID input request screen, and an exemplary password input request screen, respectively;
FIG. 19 illustrates another exemplary operation executed by the network facsimile FXa when a user operates a multipurpose key;
FIGS. 20A and 20B illustrate an exemplary network authorization usage table containing information as if a user is permitted to use network authorization in connection with an operational function, which is allocated to an applicable multi-purpose key;
FIG. 21 illustrates another exemplary operation executed by the network facsimile FXa when a user operates a multipurpose key;

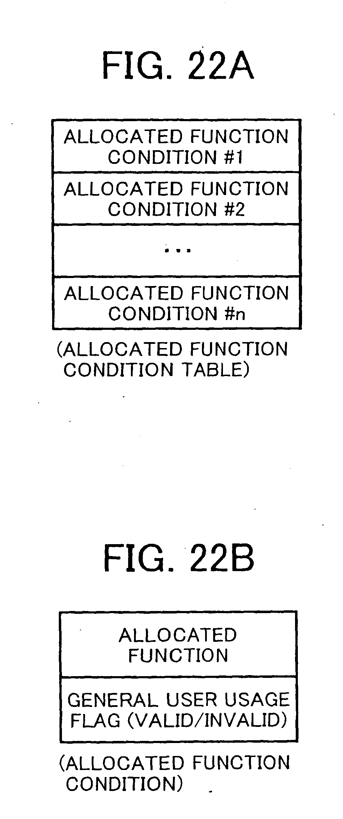

FIGS. 22A and 22B collectively illustrate an exemplary general user usage permission table containing information as if a user is permitted to use in connection with an operational function, which is allocated to a corresponding multi-purpose key;
FIG. 23 illustrates still another exemplary operation executed in the network facsimile FXa when a multipurpose key is operated;
FIGS. 24A to 24D illustrate another exemplary operational function table, another validity table, another usage permission table, and another user type table, respectively; and
FIG. 25 illustrates still another exemplary operation executed by the network facsimile FXa when a user operates a multipurpose key.

### DESCRIPTION OF THE PREFERRED EMBODIMENTS

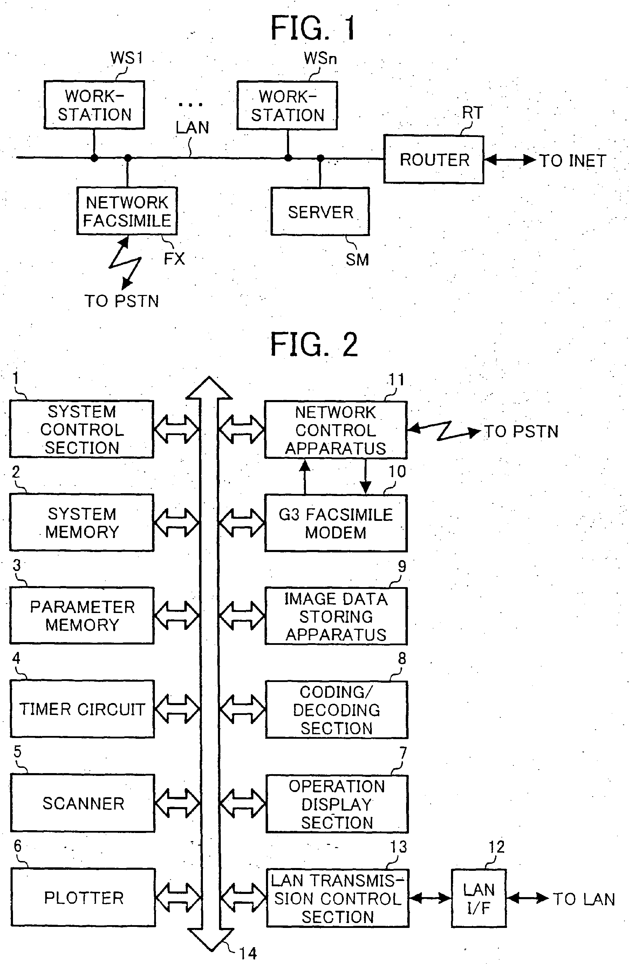

Referring now to the drawings, wherein like reference numerals designate identical or corresponding parts throughout several views, and in particular to FIG. 1, an exemplary network communication system according to one embodiment of the present invention is described.

As shown, a plurality of workstations WS1 to WSn, a server SM, and a network facsimile FX are connected to a local area network (hereinafter referred to as a LAN) and the Internet via a router RT to communicate data with another appropriate terminal apparatus. The server SM includes a mail server function to provide known services, such as collecting and delivering electronic mail, etc., to and from a plurality of users through the workstations WS1 to WSn. Further included is an authorization function to provide the other terminal apparatus with a user authorization function.

When an operation system installed in the server SM is of the Windows NT (TM) series manufactured by Microsoft Co, LTD., the server SM provides an NT authorization function. An LDAP (Lightweight Directory Access Protocol) and similar protocol included in a directory server function can be used as an alternative.

Further, the workstations WS1 to WSn each stores various programs, such as facsimile application software that generates, displays, and outputs facsimile image information, software that communicates various data via the local area network LAN, etc., to be used by one or more specified users.

The network facsimile FX includes an electronic mail processing function that communicates image information and/or various reports as an electronic mail. Further included is a transmission function, which is executed through an analog public line network PSTN and transmits image information by group 3 (hereinafter referred to as a G3) facsimile transmission procedure.

Referring now to FIG. 2, an exemplary configuration of the network facsimile FX will be described.

A system control section 1 executes various control operations, such as controlling each of sections of the network facsimile FX, controlling a facsimile transmission sequence, etc. A system memory 2 provides the system control section 1 with a work area, and stores control operation program to be executed by the system control section 1, and various data necessary for executing the control operation program. A parameter memory 3 stores various informations, which are inherent to the network facsimile FX. A timer circuit 4 outputs a current time.

A scanner 5 reads an image on an original document at a prescribed resolution. A plotter 6 prints out an image at a prescribed resolution. An operation display section 7 includes various operation keys and one or more displays to allow a user to operate and use the network facsimile FX.

An encoding/decoding section 8 encodes and compress an image signal, and decodes the encoded and compressed image information back to an original image signal. An image information accumulation apparatus 9 accumulates a lot of encoded and compressed image information.

A G3 facsimile MODEM 10 includes a low speed MODEM function (e.g. V.21 MODEM) to communicate transmission procedural signals and a high speed MODEM function (e.g. V.17, V.34, V.29, and V.27ter MODEMs) to mainly communicate image information for the G3 facsimile.

A network control apparatus 11 includes an automatic mail transmission/reception function, and connects the network facsimile FX to an analog public line network PSTN.

A local area network interface circuit 12 connects the network facsimile FX to a local area network LAN. A local area network transmission control section 13 controls various data communication with other data terminal apparatuses via the local area network, i.e., LAN, using various protocol suites.

These system control section 1, system memory 2, parameter memory 3, timer circuit 4, scanner 5, plotter 6, operation display section 7, encoding/decoding section 8, image information accumulation apparatus 9, G3 facsimile MODEM 10, network control apparatus 11, and LAN transmission control section 13 are connected to an interior path 14 to communicate with each other.

Further, the G3 facsimile MODEM 10 and network control apparatus 11 directly perform the data communications with each other.

Further, a liquid crystal display (i.e., LCD, not shown) having a relatively large screen is employed in the operation display section 7. A touch panel (not shown) is arranged on the LCD. A plurality of symbols (e.g. buttons) is displayed on the LCD to allow a user to operate. Based upon a coordinate of an operated position on the touch panel and that of the position of a symbol, the symbol given a touch may be determined. Such an operation device with the symbols is called a software switch. However, since an operation display section 7 is publicly known, description thereof is omitted here.

Further, the operation display section 7 includes a plurality of multipurpose keys, so called user function keys, through which a user can input and define one or more operational functions. A supervisory user, who supervises the network facsimile, generally allocates the operational functions to applicable multipurpose keys, respectively. The operational functions are previously stored in the parameter memory 3 in accordance with the allocation.

To increase flexibility in displaying labels, multipurpose keys are sometimes formed on software switches. Specifically, an operation section for the multipurpose keys is arranged on the LCD, and a display of operational functions allocated to the multipurpose keys is switched per a user.

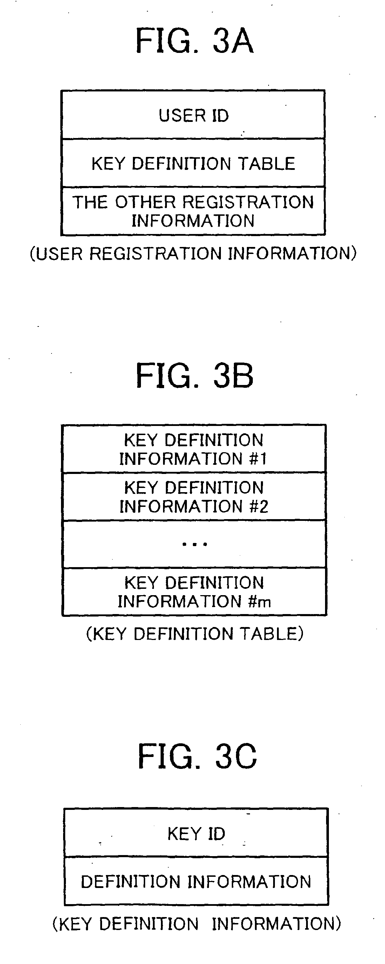

In a preferred embodiment, some of users are permitted to use the network facsimile FX, while their information are stored in the parameter memory 3 as shown in FIG. 3A. Specifically, the user registration information may include a plurality of user IDs for identifying respective users, a key definition table storing various key definition information each defines an operational function allocated to an applicable multipurpose key per a user, and the other registration information. The user IDs also includes information representing a general user, which has not been registered, beside a specified user.

Specifically, the key definition table is formed from key definition information for each of the multipurpose keys as illustrated in FIG. 3B. Such key definition information includes a key ID, which identifies each of the multipurpose keys, and key definition information, which specifies one or more operational functions as shown in FIG. 3C. The key definition information may define an operational function, such as if a name of a mail sender is printed, if a transmission management report is recorded and outputted, and if a network facsimile FX mode is switched to a printer mode, etc.

In a preferred embodiment, data communications between the terminals apparatuses via the LAN are performed using protocol combination (e.g. protocol suite) of a transmission protocol, which ranges up to a transport layer called TCP/IP, and a communication protocol of an upper rank layer. For example, when electronic mails are to be sent, an SMTP (Simple Mail Transfer Protocol) is adopted as a communication protocol for the upper rank layer. A predetermined protocol is used in data communication between an authorization server and a terminal apparatus, such as a network facsimile FX, workstations WS1 to WSn, etc. However, because the protocol is publicly known, description thereof is omitted here.

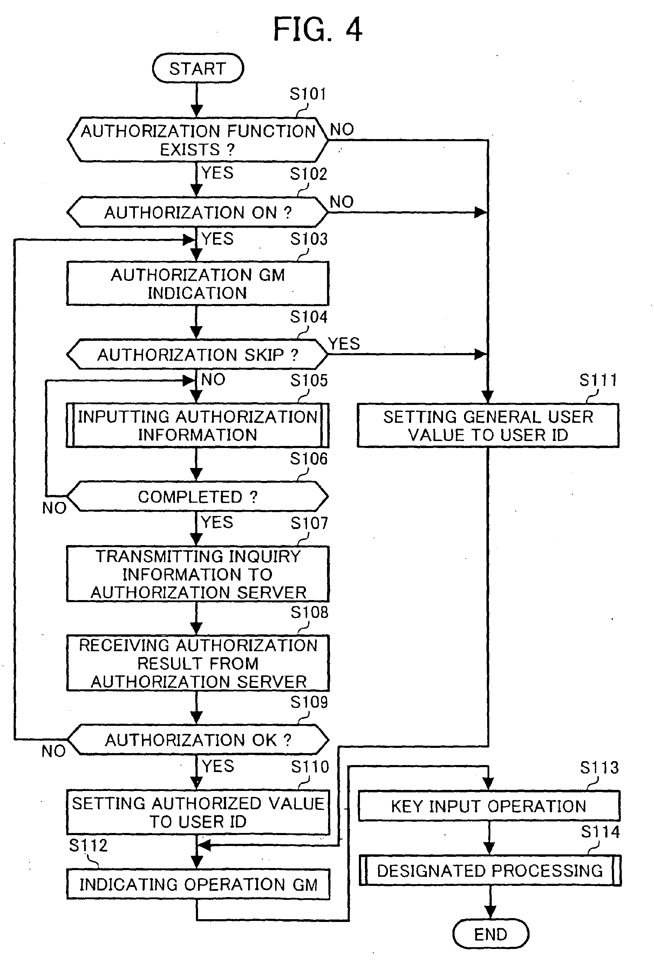

A first exemplary operation of the network facsimile FX will be now described with reference to FIG. 4.

The system control section 1 receives designation of an operational function from a user, and then executes the operational function based on prescribed conditions. Specifically, it is initially checked if an authorization function is included in the network communication system in step S 101. If the determination of step S101 is positive (i.e., Yes), it is further checked if a condition that an authorization function is used has been set in step S102.

If the determination of step S 102 is positive, an authorization guidance message is displayed as a standby mode, for example, to request a user to input a user name through the display screen of the operation display 7. Since the user can skip the authorization here, the system control section 1 checks if the user skips the authorization in step S104. If the determination in step S 104 is negative (i.e., No), the system control section 1 requests the user to input the above-mentioned authorization information, for example, a password.

When the authorization information is completely inputted and the determination in step S 106 is positive, the system control section 1 requests a prescribed authorization server SM, which has been previously registered, to authorize the user by transmitting the user name and password as inquiry information in step S107.

The server SM then executes a prescribed authorization operation for such as a user name and a password with reference to previously registered user information. The authorization server then reports the authorization result to the network facsimile FX. Information of authorization result (hereinafter referred to as authorization reporting information) includes, at least, an a user ID, a positive or negative authorization result, and a user type, such as a general user, a supervisory user, etc., having different capability of usage.
Then, the network facsimile FX checks if the determination in step S109 is positive upon receiving the authorization reporting information. When the determination in step S109 is negative, a display or sound notifying the negative authorization is output, and then the step returns to the step S103. Specifically, authorization is requested again. In contrast, when the determination of step S109 is positive, the user information included in authorization reporting information is set to the user ID in step S110.

Further, one when a user skips the authorization, i.e., the determination of step S104 is positive, when a condition that the authorization function is used has not been set even included in the network communication system, i.e., the determination of step S102 is negative, and when the authorization function is excluded in the network communication system, i.e., the determination of step S101 is negative, an information representing a general user is set as a user ID in step S111.

When the information is completely set to the user ID, an operational guidance massage is displayed on the display in step S112. One or more inputs are then received from the user through his or her operation of the multipurpose key in step S113. The network facsimile FX then realizes a prescribed operational function designated by the user in step S114.

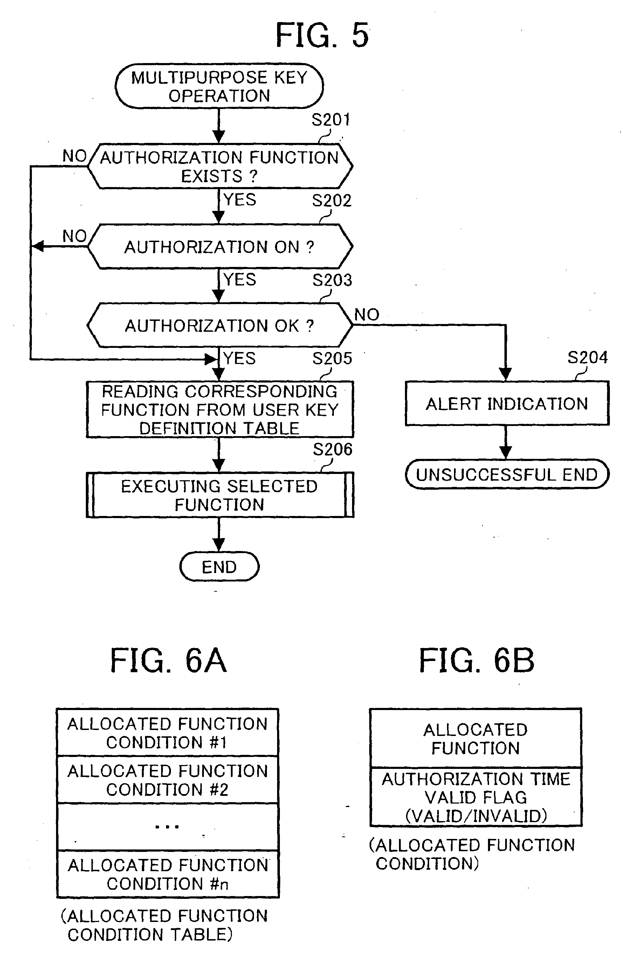

Referring now to FIG. 5, an exemplary operation executed when any one of multipurpose keys UK1 to UK8 is operated and a standby screen is displayed on a network facsimile FX will be described.

It is initially checked if an authorization function is included in the network work system in step S201. If the determination of step S201 is positive, it is checked if a condition that the authorization function is used has been set in step S202. If the determination of step S202 is positive, it is further checked if the authorization result is positive in step S203. If the determination of the step 203 is negative (i.e., No), an error message indicating that "operation is impossible, because you are not authorized" is displayed as alert in step S204. The process is then unsuccessfully completed. In displaying the alert, so called NACK sound can be generated to represent rejection to the operation. Otherwise, the other sound canbe generated to reported denial of operation.

If the determination of step S203 is positive, key definition information in the key definition table is referred to in correspondence with a user ID in step S205. Then, an operational function allocated to a corresponding multipurpose key is determined and read from an applicable key definition information. The operational function is subsequently executed in step S206. Further, if one of the determinations in steps S202 and S203 is negative, the process advances to step S205, and the subsequent operations are executed.

Thus, according to the preferred embodiment, usability is widely improved, because one or more operational functions previously registered in a memory per a user can be automatically set to corresponding one or more multipurpose keys when user authorization operation is executed.

Another embodiment according the present invention will now be explained. Among various operational functions automatically set to one or more multipurpose keys, there can be an undesirable function to be used by an authorized user. Specifically, the operational function is intended to be used only by a specified user, for example.

To apply such limitation, a validity table is provided to describe validity information (e.g. valid and invalid), and represent if an authorized user is practically permitted to use an allocated operational function as shown in FIG. 6A. Specifically, a flag, indicating if an operational function allocated to a multipurpose key for the authorizeduser is validated or invalidated, is registered in connection with an operational function as shown in FIG. 6B.

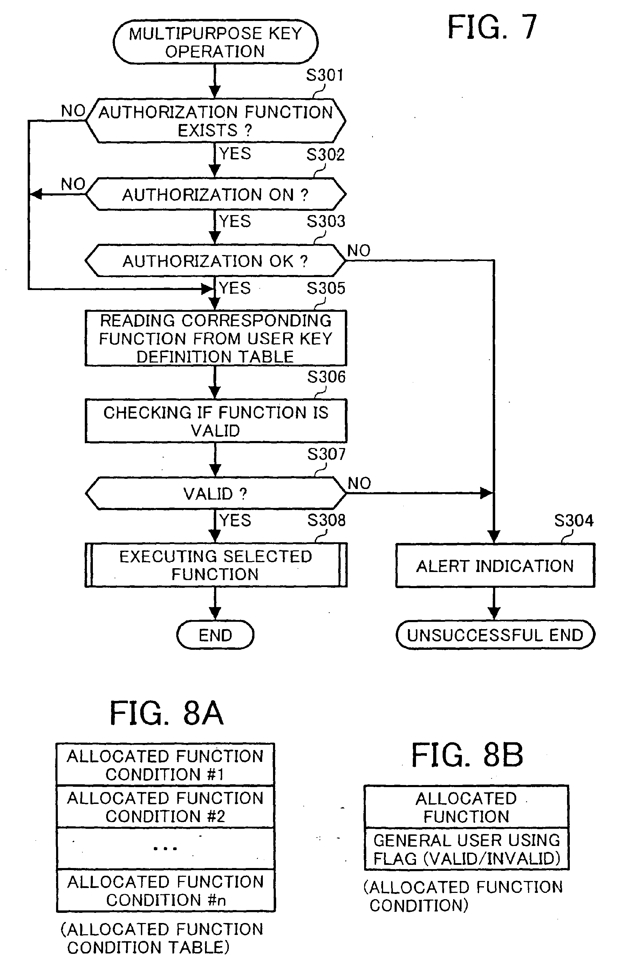

Referring to FIG. 7, an exemplary operation executed using the validity table when any one of multipurpose keys UK1 to UK8 is operated and a standby screen is displayed on the network facsimile FX will be described.

The system control section 1 executes the similar operation to that described with reference to FIG. 4.

Specifically, it is initially checked if an authorization function is included in the network work system in step S301. If the determination of the step S301 is positive, it is checked if a condition the authorization function is used has been set in step S302.

If the determination of step S302 is positive, it is further checked if the authorization result of step S303 is positive. If the determination of step S303 is negative, an error message such as "operation is impossible because you are not authorized" is displayed as alert in step S304. The process is then unsuccessfully completed. Other wise, so-called NACK sound is provided to notify rejection to operation of the multipurpose keys. Still otherwise, prescribed sound representing denial of the operation can be employed.

If the determination of step S303 is positive, a key definition information in the key definition table is read corresponding to the user ID in step S305. Then, a prescribed operational function is determined and read from a corresponding key definition information. Then, the validity table is referred to and the validity information corresponding to the operational function is checked. Specifically, it is determined if the flag indicates either the operational function is valid or invalid in steps S306 and S307.

If the determination of the step S307 is positive, the operational function can be executed in step S306. In contrast, if the determination in step S307 is negative, the process goes to step S304. Then, an alert screen is displayed. The process is then unsuccessfully completed. If one of the determinations of the steps S302 and S301 is negative, the process advances to step S305, and subsequent operations are executed.

As mentioned above, a general user information is set as a user ID, one of when the authorization function is excluded in the network communication system, a condition that the authorization function is used has not been set even included, and a user skips user authorization.

In such a situation, a number of operational functions available to the general user are limited. However, it is preferable that the general user can use the network facsimile FX based upon registration information. Because, the authorized and general users can be discriminated from the other.

However, since such an unregistered user can set an operational function beforehand to the network facsimile FX, he or she can enjoy the operational function even in the limited range, freedom of usage of the network facsimile FX can be improved.

For example, when a general user operating the workstation WS1 intends to use the network facsimile FX, which is commonly connected to the LAN, as a printer, and changing to a printer mode is allocated and set to amultipurpose key as an operational function available to the general user, the general user can let it performs printing when operating the multipurpose key without obtaining new authorization.

Substantially no security problems occur when the workstation WS1 is used, because the general user has already obtained the authorization from the authorization server SM.

Then, a general user table containing a plurality of information, each of which indicates availability to a general user in connection with an operational function, is provided as shown in FIG. 8A. Specifically, a general user usage flag is used and designates if an operational function allocated and designated by the general user is validated or invalidated is registered in connection with each of the operational functions as shown in FIG. 8B.

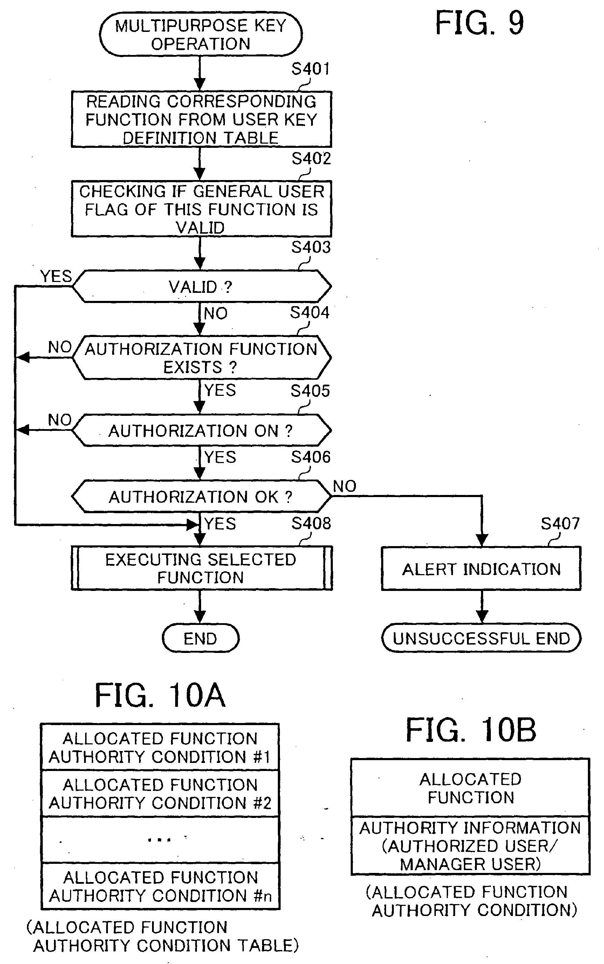

Referring now to FIG. 9, an exemplary process executed when any one of multipurpose keys UK1 to UK8 is operated, and a general user is set as a user ID on a standby screen of the network facsimile will be described.

The system control section 1 executes the similar operation to that described with reference to FIG. 4. Specifically, an operational function allocated to a multipurpose key operated is initially read from the key definition table for the general user in a step S401. Then, it is checked if an applicable general user usage flag indicates that the operational function is valid with reference to the general user table.

If the determination of step S403 is negative, it is checked if an authorization function is included in the network communication system in step S404. If the determination of step S404 is positive, it is further checked if a condition that the authorization function is used has been set in step S405.

If the determination of step S405 is positive, it is further checked if the authorization result is positive in step S406. If the determination of step S406 is negative, an error message such as "key operation is impossible because you are not authorized" is displayed as alert in step S407. The process is then unsuccessfully completed. In place of displaying the alert, so called NACK sound indicating rejection to the key operational can be generated. Otherwise, prescribed sound representing denial of the key operational can be generated and reported. If the determination of step S406 is positive, the operational function is executed in step S408.

Further, one of when the determinations of steps S405 and S404 is negative or when the determination of step S403 is positive, the process advances to step S408. The subsequent operation is then executed.

Further, user type information is provided to indicate availability of an operational function to a user who is categorized into a prescribed type. The user type information is linked with an operational function allocated to a prescribed multipurpose key. For example, if the user type is categorized into two, e.g. an authorization user who simply operates the network facsimile, a supervisory user who generally supervises a network communication system, to restrict their authority into proper ranges such that only the supervisory user can use a prescribed operational function, and the network facsimile FX is preferably operated.

Then, a user type table is provided to describe availability of each operational function in connection with the user type as shown in FIG. 10A. Specifically, availability information is registered in connection with an operational function as shown in FIG. 10B. Therefore, one of the authorization and supervisory users is registered as the user type information.

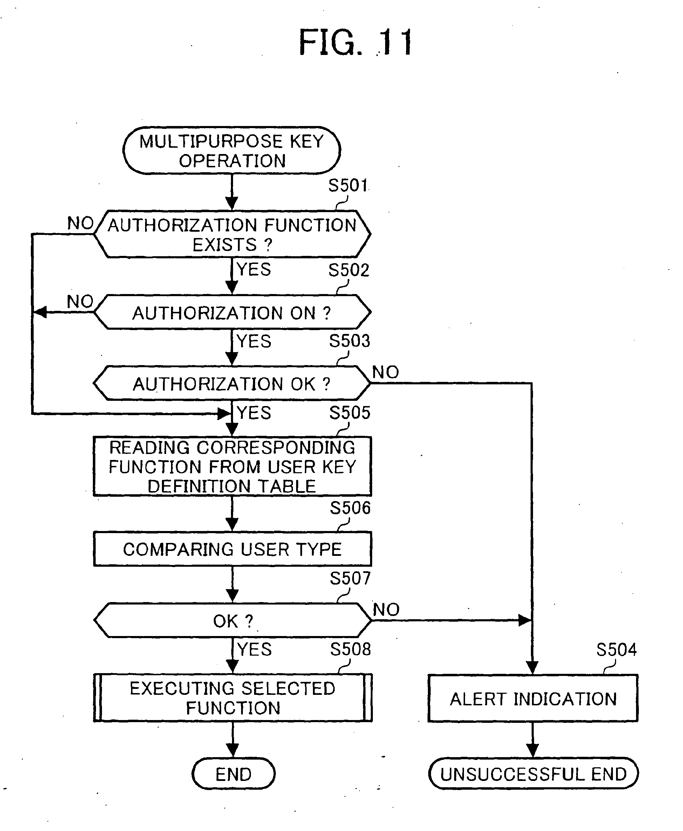

Referring now to FIG. 11, an exemplary operation executed with reference to the user table when any one of multipurpose keys UK1 to UK8 is operated and a standby screen is displayed on the network facsimile will be described.

The system control section 1 executes the similar operation to that described with reference to FIG. 4. Specifically, it is initially checked if an authorization function is included in the network communication system in step S501. If the determination of step S501 is positive, it is further checked if a condition that the authorization function is used has been set in step S502.

If the determination of step S502 is positive, it is checked if the determination of the authorization in step S503 is positive. If the determination of the step S503 is negative, an error message such as "operation is impossible because you are not authorized" is displayed as alert in step S504. The process is thus unsuccessfully completed. In place of displaying the alert, so called NACK sound representing rejection to operation can be generated. Otherwise, prescribed sound representing denial of the operation can be generated and reported.

If the determination of the step S503 is positive, an operational function in a key definition table corresponding to the used ID is read at that time in step S505. Thus, an operational function allocated to a corresponding multipurpose key is determined. A user type is then checked based on the user ID in connection with the determined operational function with reference to the user type table. Specifically, the user type information is compared with a user information included in authorization reporting information to determine if the user of the prescribed user type has authority to execute the determined operational function in steps S506 and S507. If the determination of the step S507 is positive, the operational function determined at that time is exerted in step S506. In contrast, if the determination of step S507 is negative, the process goes to step S504, and is unsuccessfully completed while displaying an alert screen.

When one of the determinations in steps S502 and S501 is negative, the process advances to step S505, and the subsequent operations are executed.

The above-mentioned several embodiments employ the network facsimile FX. However, the present invention is not limited thereto and can employ other types of communications apparatuses. Even if the authorization server authorizes a user in the above-mentioned several embodiments, the present invention is not limited thereto, and can employ a local authorization system that locally authorizes the user.

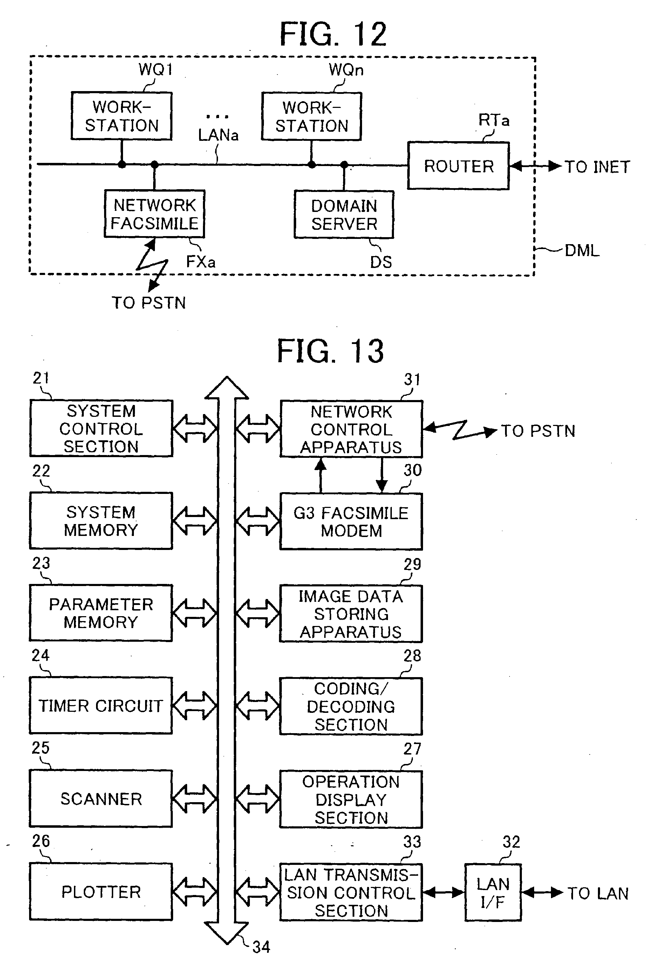

Referring now to FIG. 12, an exemplary network communication system will be described according to another embodiment of the present invention.

As shown, a plurality of workstations WQ1 to WQn, a domain server DS, and a network facsimile FXa are connected to a local area network LANa and an Internet via a router RTa. Accordingly, the workstations WQ1 to WQn, the domain server DS, and the network facsimile FXa can communicate data with other appropriate terminal apparatuses via the Internet.

These workstations WQ1 to WQn, the domain server DS, and the network facsimile Fxa collectively form one domain DML.

The domain server DS includes amail server function toprovide known services such as electronic mail collection and delivery, etc., to users who use the workstations WQ1 to WQn as well as the network facsimile FXa. Further included are various network server functions such as authorization function to provide the other terminal apparatus with a user authorization function. When an operation system installed in the domain server DS is one of Windows NT (TM) series of Microsoft Co, LTD., the domain server DS provides the terminal apparatus with an NT authorization function. A user authorization function included in a directory server function, such as LDAP, etc., can be used as an alternative.

Further, various programs such as facsimile application software that generates and displays facsimile image information, and various other software including electronic mail communications program that communicates various data via the LANa are employed in the workstations WQ1 to WQn to be used by one or more specified users.

The network facsimile FXa includes an electronic mail processing function to communicate image information and various reports as an electronic mail. Further included is a transmission function to engage and use an analog public line network PSTN and transmit image information by G3 facsimile transmission procedure.

Referring now to FIG.13, an exemplary configuration of the network facsimile FXa will be described. A system control section 21 controls operations of various sections of the network facsimile FXa, a facsimile transmission control sequence, and so on. A system memory 22 provides the system control section 21 with a work area and stores control program executed by the system control section 21 as well as various data necessary when the control program is executed. A parameter memory 23 stores various informations, which are inherent to the network facsimile FXa. A timer circuit 24 outputs current time.

A scanner 25 reads an image of an original document at a prescribed resolution. A plotter 26 prints out an image at a prescribed resolution. An operation display section 27 includes various operation keys and display items to allow a user to operate and drive the network facsimile FXa.

An encoding/decoding section 28 encodes and compresses an image signal and decodes the encoded and compressed image information back to an original image signal. An image accumulation apparatus 29 accumulates a lot of encoded and compressed image information.

A G3 facsimile MODEM 30 includes a low speed MODEM function (e.g. V.21 MODEM) to communicate transmission procedural signals and a high-speed MODEM function (e.g. V.17, V.34, V.29, andV.27ter MODEMs) to mainly communicate image information to operate the G3 facsimile.

A network control apparatus 31 includes an automatic mail transmission/reception function and connects the network facsimile FXa to the analog public line network PSTN. A local area network interface circuit 32 connects the network facsimile FXa to a local area network LANa. A local area network transmission control section 33 controls various data communications with data terminal apparatuses via the local area network LANa using various Protocol suites.

These system control section 21, system memory 22, parameter memory 23, timer circuit 24, scanner 25, plotter 26, operation display section 27, encoding/decoding section 28, image accumulation apparatus 29, G3 facsimile MODEM 30, network control apparatus 31, and LANa transmission control section 33 are connected to an interior path 34 to communicate with each other.

Further, the G3 facsimile MODEM 30 and the network control apparatus 31 directly perform data communications therebetween.

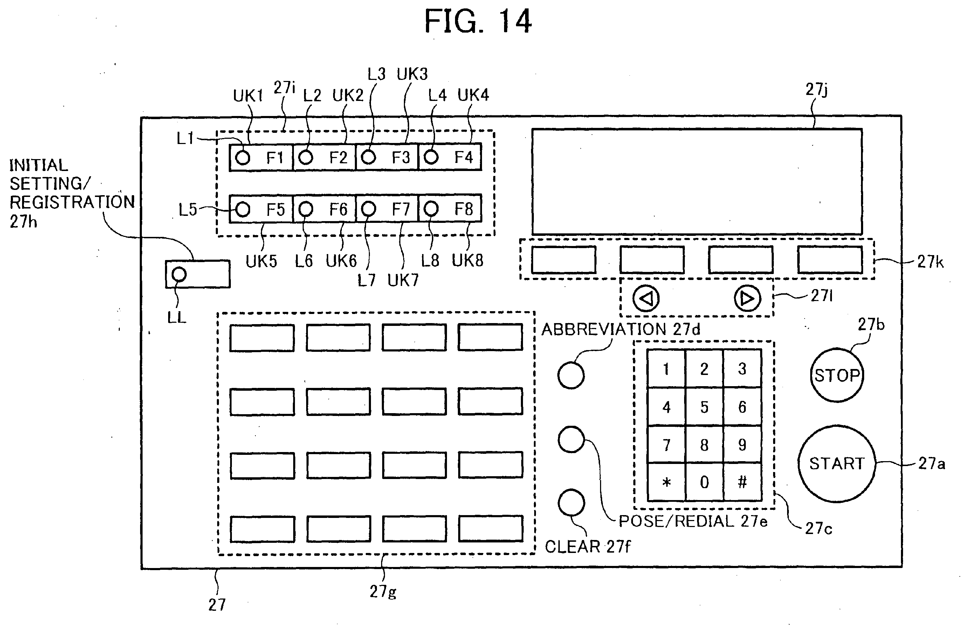

Referring now to FIG. 14, an exemplary configuration of a display section 27 will be described.

As shown, a start key 27a is provided to allow inputting of an instruction to start operating the network facsimile FXa. A stop key 27b is provided to allow inputting of an instruction to stop operating the network facsimile FXa. Ten-pad keys 27c are provided to allow inputting of numeric information such as telephone number, etc.

An abbreviated dial key 27d is provided to input an instruction of abbreviated dialing. A pose/redial key 27e is provided to input posing (silent code) and redialing instructions. A clear key 27f is provided to delete single digit from a numeric value input by the ten-pad keys 27c.

A one-touch dial key 27g is provided to operate and input a destination number or a mail address by single key operation. The one-touch dial key 27g is also used when alphanumeric characters forming the mail address are input.

An initial setting/registration key 27h is provided to input initial setting and register supervisory setting to the network facsimile NXa. A light emitting diode LL is attached to the initial setting/registration key 27h to notify a condition that the initial setting/registration key 27h is effectively operating.

A multipurpose key cluster 27i includes eight multipurpose keys UK1 to UK8. Eight light emitting diodes L1 to L8 are respectively attached to the eight multipurpose keys UK1 to UK8, to notify conditions that these eight multipurpose keys UK1 to UK8 are operating.

A LCD 27j is provided to display various massages such as an operation guidance for the network facsimile FXa, feedback to an input, etc. Four dialog operation keys 27k are arranged below the LCD 27j. The dialog operation keys 27k are used when a user executes responsive operation through a dialog display formed on the LCD 27j. A cursor key 27i is provided to use when a selected display item is moved on the LCD 27j.

Further, a buzzer (not shown) is arranged in the operation display section 27 to generate and report alarm or the like to the user.

In a preferred embodiment, protocol combination (e.g. protocol suite) of transmission protocol ranging to a transport layer called TCP/IP and communication protocol of the upper rank layer than the transport layer essentially execute data communications among the terminal apparatuses connected to the LANa. For example, when electronic mails are communicated, an SMTP (Simple Mail Transfer Protocol) is used as a communication protocol for the upper lank layer. A prescribed Protocol may be used in data communication between the authorization server and the terminal apparatus such as a network facsimile FXa, workstations WQ 1 to WQn, etc. However, because the protocol is publicly known, description thereof is omitted here.

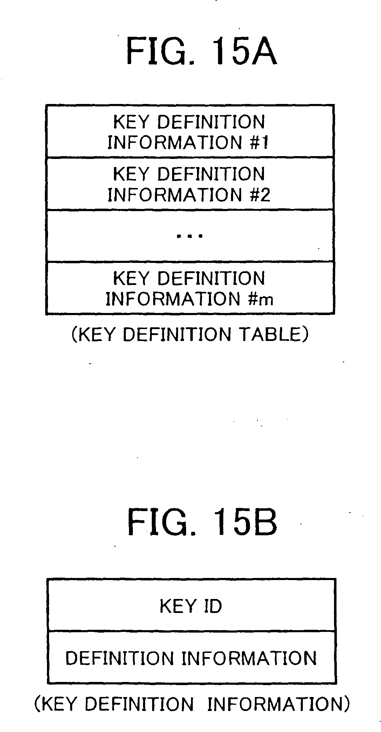

A supervisory user who supervises the network communication system allocates appropriate one or more operational functions to the multipurpose keys UK1 to UK8. Allocated informations are stored in a key definition table shown,.in FIG. 15A. Specifically, each of the key definition information of the key definition table includes a key ID, which represents one of multipurpose keys UK1 to UK8, and an operational function to be set to the multipurpose keys UK1 to UK8 as shown in FIG. 15B.

A user can optionally register one or more operational functions for one or more multipurpose keys UK1 to UK8. However, when an optional unit (not shown) is connected to the network facsimile FXa, an operational function performed by the optional unit can be automatically registered and allocated.

Further, the network facsimile FXa includes a network authorization function to perform user authorization using the NT authorization function of the domain server DS. The supervisory user can appropriately set an operational condition whether the network authorization function is used.

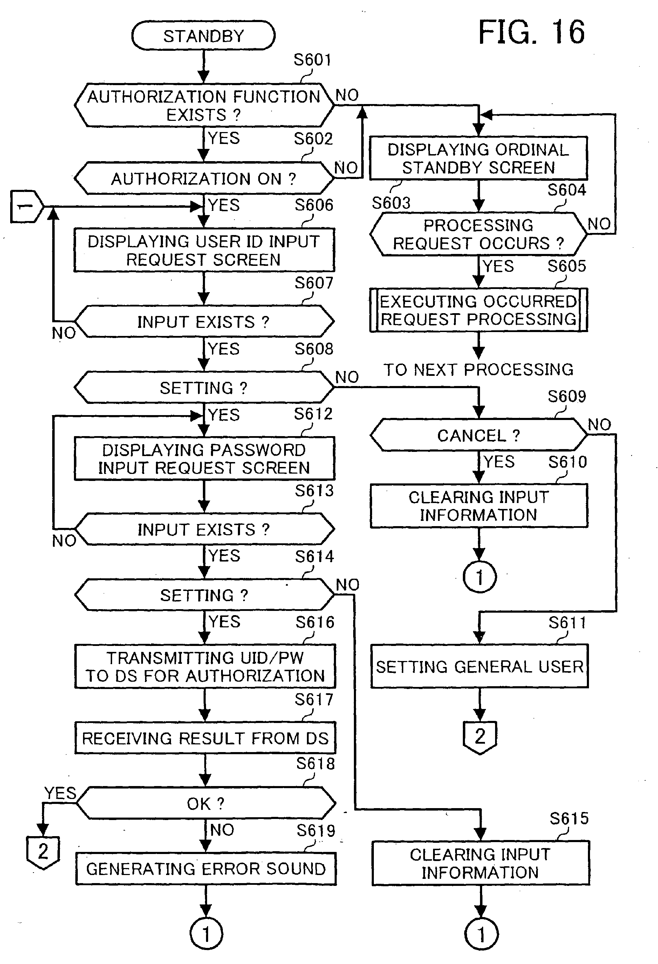

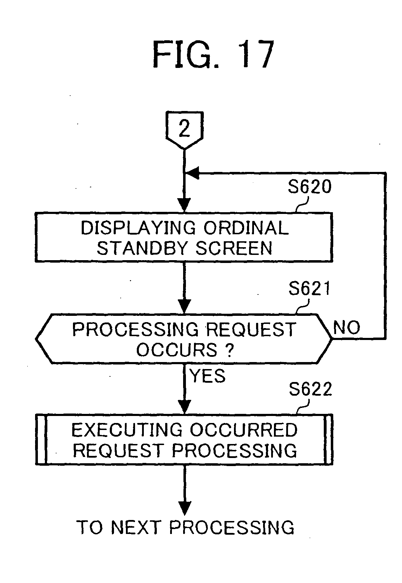

Referring now to FIGS. 16 and 17, an exemplary operation performed by the network facsimile FXa in a standby mode will be described.

It is initially checked if a network authorization function is included in the communication system in step S601. If the determination of step S601 is positive, it is further checked if a condition that an authorization function is used has been set in step S602.

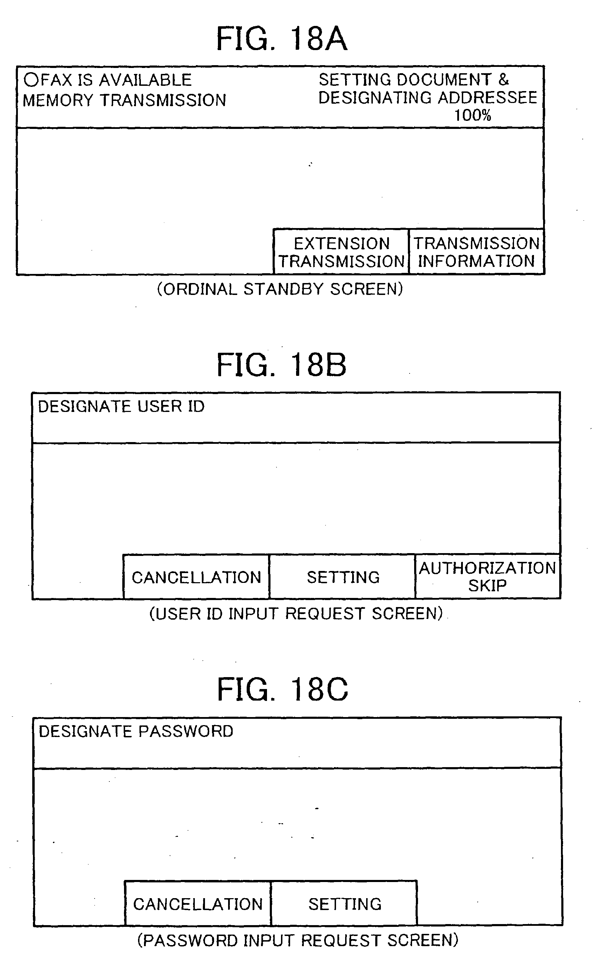

When the condition has not been set, i.e., the determination in step S602 is negative, the network facsimile FXa displays a standby screen as shown in FIG. 18A on the LCD 27j in step S603. The network facsimile FXa then monitors an occurrence of an operation request in step S604. When a certain operation request is made, i.e., the determination in step S604 is positive, the operation request is dealt and the operation is executed in step S605. The process then advances to the next.

In contrast, when the above-mentioned condition is set, i.e., the determination in step S602 is positive, the network facsimile FXa displays a user ID input request screen on the LCD 27j to request a user to obtain authorization as a leading screen as shown in FIG. 16B. The network facsimile FXa thenmonitors if a user operates and inputs through the dialog operation key 27K in steps S606 and S607 (i.e., negative loop).

Indicationsof cancellation,setting,and authorizationskip are provided in a lower portion of the user ID input request screen being assigned to the three dialog operation keys 27K. A user inputs a user ID having five digits, for example, through the ten-pad keys 27c and turns on an appropriate setting bottom (i.e., a corresponding dialog operation key 27K) when completing the input. If an input is cancelled, a cancellation button (i.e., a corresponding dialog operation key 27K) is turned on. If authorization is skipped, an authorization button (i.e., a corresponding dialog operation key 27K) is turned on.

When a user operates any one of the dialog operation keys 27K, i.e., the determination in step S607 is positive, it is further determined which one of the setting, cancellation, and authorization skip buttons is operated in steps S608 and S609.

When the cancellation button is operated, i.e., the determination in step S609 is positive, information of the user ID input at that time is cleared in step S610. The process then returns to step S606, and the user ID input request screen is displayed again.

Further, when the authorization skip button is operated, i.e., the determination in step S609 is negative, an unregistered general user is set as an operating user.

When a user ID is input to the user ID input request screen, and a setting button is operated, i.e., the determination in step S608 is positive, the network facsimile FXa stores the user ID. The network facsimile FXa then displays a password input request screen on the LCD 27j as shown in FIG. 16C, and monitors a user if he or she operates any one of the dialog operation keys 27K in steps S612 and S613 (i.e., Negative Loop).

The user inputs a password having four to eight digits, for example, and registers in the NT authorization server, using the ten pad keys 27c. The user may turn on the setting button upon completing the input. Further, when canceling the input information, the user can turn on the cancellation button.

When the user operates any one of the dialog operation keys 27K, i.e., the determination of step S613 is positive, it is checked if the operated any one of the dialog operation keys 27K is either the setting button or cancellation button in step S614.

When the cancellation button is operated, i.e., the determination of step S614 is negative, input information such as a user ID, a password, etc., is cleared in step S615. Then, the process returns to step S606, and the user ID input request screen is displayed again.

When the password is input to the password ID input request screen and the setting button is operated, i.e., the determination of step in S614 is positive, the network facsimile FXa stores the input password, and starts the network authorization function. Specifically, the network facsimile FXa transmits the user ID and the password to the domain server DS as a request for a network authorization in step S616.

The domain server DS receives the network authorization request, and then applies the NT authorization to the user ID and the password. The domain server DS reports a result of the authorization to the terminal apparatus (e. g. the network terminal FXa).

Accordingly, the network facsimile FXa receives the authorization reporting from the domain server DS in step S617, and checks if the authorization is positive in step S618.

If the authorization is negative, i.e., the determination in step S618 is negative, the operation display section 27 generates error sound in step S619. Then, the process returns to step S606, and the user ID input request screen is displayed again.

If either the authorization, i.e., the determination in step S618 is positive, or a user operates the authorization skip button in the user ID input request screen, i.e., the determination in step S609 is negative, and accordingly a general user is set as a user in step S611, the process advances to step S620, and a standby screen is displayed. An occurrence of an operation request is then monitored in steps S620 and S621 (i.e., Negative Loop).

If a certain operation request occurs, i.e., the determination of step S621 is positive, the operation request is dealt, i.e., the requested operation is executed, in step S622, and the process advances to the next.

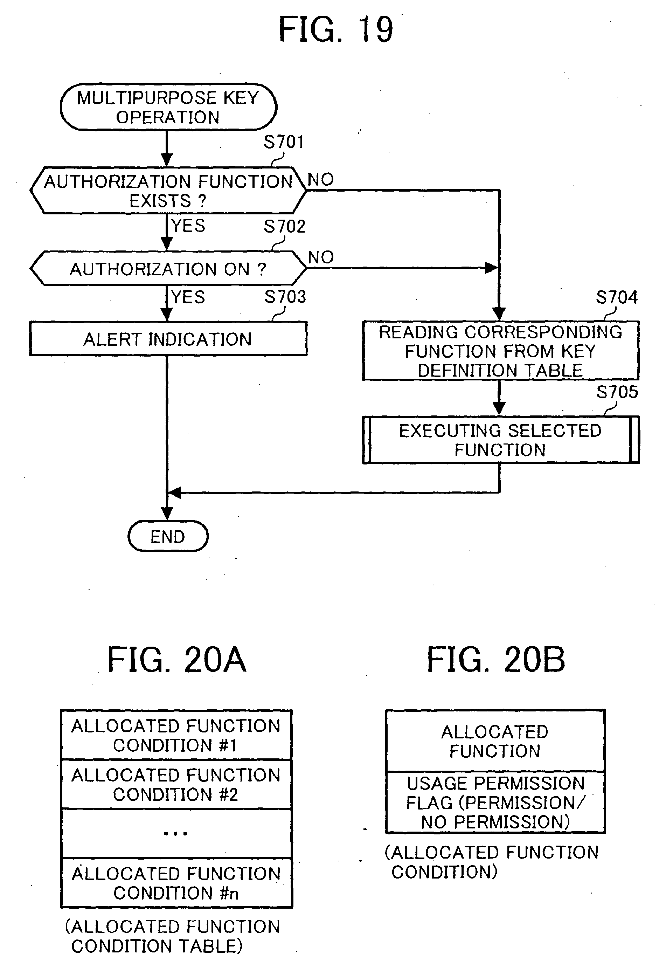

Now, with reference to FIG. 19, an exemplary operation performed when any one of multipurpose keys UK1 to UK8 is operated and a standby screen is displayed on the network facsimile FXa will be described.

It is checked if a network authorization function is included in the network communication system in step S701. If the determination in step S701 is positive, it is checked if a condition that the network authorization function is used has not been set in step S702.

If the condition has been set, i.e., the determination in step S702 is positive, an alert message is displayed on the LCD 27j in step S703, and operation of the multipurpose keys UK1 to UK8 is inhibited, because the authorization has not yet been given.

One of when the condition has not been set, i.e., the determination in step S702 is negative, and when the network authorization function is excluded in the network communication system, i.e., the determination in step S701 is negative, key definition information allocated to one of the operated multipurpose keys UK1 to UK8 is read from the key definition table in step S704. An operational function corresponding to the key definition information is then executed in step S705. Because, usage of the multipurpose keys UK1 to UK8 are permitted.

According to the preferred embodiment, since the system supervisory user registers one or more operational functions related to system setting to be set to the multipurpose keys UK1 to UK8 as being only available to him or her, a system administrative problem that a user other than the system supervisory user can unreasonably use the one or more operational functions can be avoided or suppressed. Because, usage of the multipurpose keys UK1 to UK8 are inhibited when the above-mentioned registration is executed, properly.

In this situation, when a security mode mentioned above is cancelled in order not to use the network authorization function, the multipurpose keys UK1 to UK8 can be appropriately used.

An exemplary operation of the network facsimile FXa will be now described.

In the above-mentioned several embodiments, when a condition that a network authorization function is used is set, the multipurpose keys UK1 to UK8 are generally inhibited to use before the authorization. However, such inhibition restricts freedom of operation.

Then, operational of the multipurpose keys UK1 to UK8 is exceptionally permitted depending upon an operational function even if the above-mentioned network authorization condition has been set. As a result, usability of the multipurpose keys UK1 to UK8 can be improved.

Specifically, as shown in FIG. 20A, an operational function usage permission table is employed and includes a unit of operational function identification information identifying a operational function, and an operational function usage permission flag representing if an operational function is exceptionally permitted to use as shown in FIG. 20B.

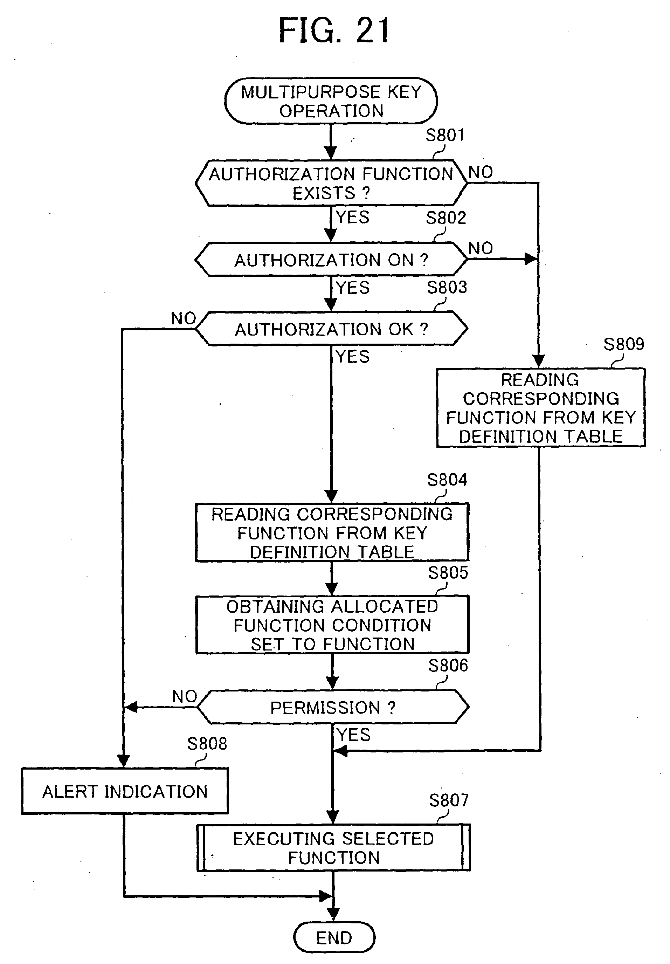

Referring now to FIG. 21, an exemplary operation executed when any one of the multipurpose keys UK1 to UK8 of the network facsimile FXa is operated and a standby screen is displayed will be described.

It is initially checked if a network authorization function is included in the network communication system in step S801. If the determination of step S801 is positive, it is further checked if a condition that a network authorization function is used has been set in step S802.

When the condition has been set, i.e., the determination of step S802 is positive, it is checked if an operating user is authorized by the network authorization function in step S803.

If the determination of step S803 is positive, key definition information allocated to the operated one of multipurpose keys UK1 to UK8 is read from the key definition table in step S804.

Permission information corresponding to the operational function of the key definition information is then obtained from the operational function usage permission table in step S805. Then, it is determined if the operational function is permitted to use by taking a match with the permission information in step S806. If the determination is positive in step S806, the operational function is executed in step S807. Thus, the multipurpose keys UK1 to UK8 can be efficiently used.

In contrast, one of when usage of the operational function is not permitted, i.e., the determination in step S806 is negative, and when a user authorization is skipped, and accordingly a general user is set as an operating user, i.e., the determination in step S803 is negative, an alert message is displayed on the LCD 27j in step S808. Thereby, the operation of the multipurpose key operation is neglected.

Further, one of when the network authorization function has not been set, i.e., the determination in step S802 is negative, and when the network authorization function is excluded in the network communications system, i.e., the determination in step S801 is negative, usage of the multipurpose keys UK1 to UK8 is permitted. Thus, prescribed key definition information allocated to the operated one of multipurpose keys UK1 to UK8 is read from the key definition table in step S809. Then, the process goes to step S807, and the one of operational functions is executed in accordance with the key definition information.

Still another exemplary operation of the network facsimile FXa will be described.

It is generally preferable to permit a general user to use a limited number of multipurpose keys UK1 to UK8 with depending on an operational function. Then, a general user usage flag, which represents if usage of an operational function is permitted to the general user, is registered in connection with an operational function in a general user usage table.

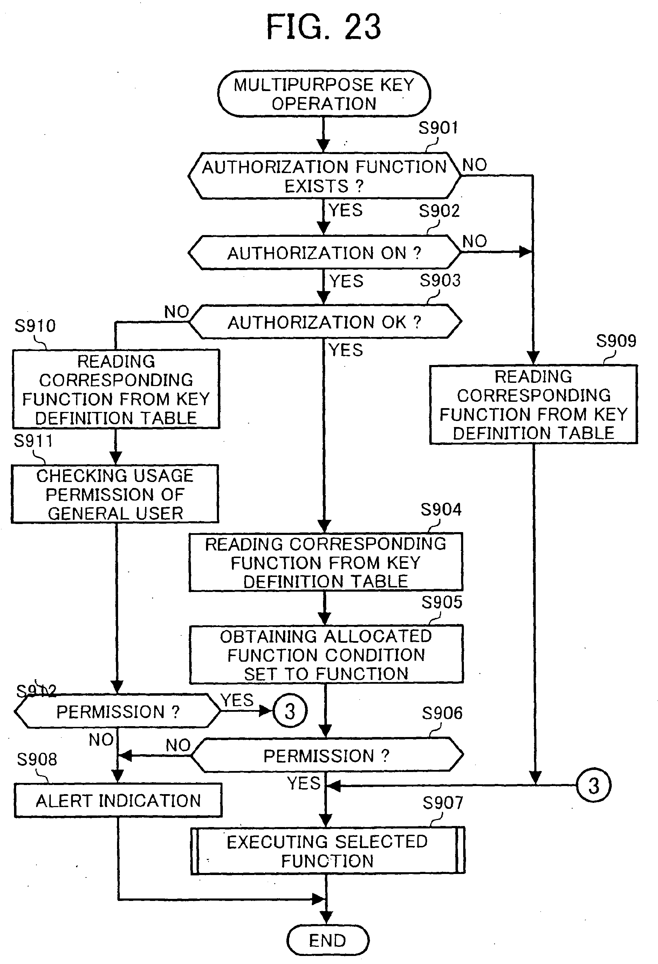

Referring now to FIG. 23, an exemplary operation performed with reference to the general user usage table when any of the multipurpose keys UK1 to UK8 of the network facsimile FXa is operated and then a standby screen is displayed will be described.

It is initially checked if a network authorization function is included in the network communication system in step S901. If the determination of step S901 is positive, it is further checked if a condition that a network authorization function is used has been set in step S902.

If the condition has been set, i.e., the determination of step S902 is positive, it is further checked if an operating user has been authorized by the network authorization function in step S903. If the determination of step S903 is positive, key definition information allocated to the operated one of multipurpose keys UK1 to UK8 is read from a key definition table corresponding to a user ID in step S904.

Then, a permission information registered corresponding to the operational function is obtained from the general user usage table in step S905. It is then checked if the operating user is permitted to use the operational function by taking a match therebetwen in step S906.

When the determination is positive in step 906, i.e., the operational function is executed in step S907. Thus, the multipurpose keys UK1 to UK8 can be efficiently used.

In contrast, when usage of the operational function is not permitted, i.e., the determination in step S906 is negative, an alert message is displayed on the LCD 27j in step S908, and operation of the multipurpose key is neglected at the time.

When a user authorization is skipped, and accordingly a general user is set as an operating user, i.e., the determination in step 903 is negative, key definition information allocated to one of the multipurpose keys UK1 to UK8 operated by the general user is read from the key definition table in step S910. Then, it is checked, in step S912, if the general user is permitted to use the operational function by obtaining a corresponding permission information from the general user usage table in step S911.

When the determination is positive in step S912, the process goes to step S907, and the operational function is executed. Thus, the multipurpose keys UK1 to UK8 can be efficiently used even in a restricted range.

In contrast, when the general user is not permitted to use the operational function, i.e., the determination in step 912 is negative, theprocess advances to step S908. Then, an alertmessage is displayed on the LCD 27j, and the operation of the one of multipurpose keys UK1 to UK8 is neglected at the time.

Further, one of when the above-mentioned condition has not been set, i.e., the determination in step S902 is negative, and when the network authorization function is excluded in the network communication system, i.e., the determination in step S901 is negative, usage of the multipurpose keys UK1 to UK8 is permitted in a prescribed restricted range.

Specifically, a key definition information allocated to an operated one of multipurpose keys UK1 to UK8 is read from the key definition table in step S909, and the operational function defined the key definition information is executed in step S907.

Still another exemplary operation performed by the network facsimile FXa will be described.

It is generally preferable if a user is restricted in using the multipurpose keys UK1 to UK8 in accordance with a user type. For example, capability of using the network facsimile FXa and a domain resource preferably is restricted in accordance with the user type, such as a supervisory user, a network supervisory user, etc.

Since the network facsimile FXa belongs to the domain DML, it is some times categorized into a type of the domain resource. Thus, the network facsimile FXa includes a function used only by the network supervisory user, i.e., other than an ordinal system supervisory user. For example, authority of setting various functions related to a network and so on is only given to the network supervisory user.

Since NT authorization only includes information as to if authorization is either permitted or rejected, a detail of authorization given to a user is generally unclear.

Then, it is preferable that user type information, which indicates an authorization range, is registered and referred to by the network facsimile FXa.

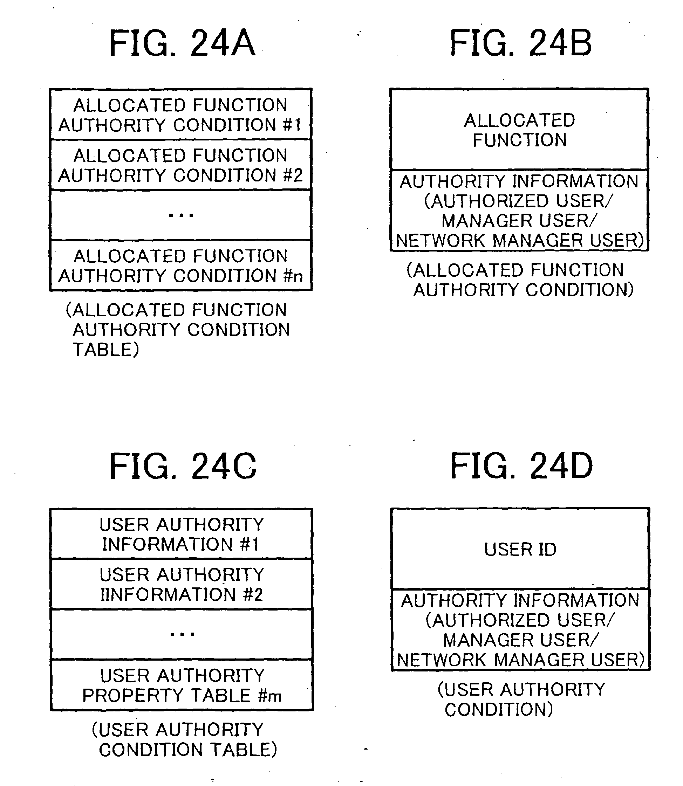

In this regard, information of a user type, such as an authorized user, a supervisory user, a network supervisory user, etc., is registered in connection with an operational function in a user type information table, as shown in FIGS. 24A, 24B and 24C. The user type information includes a user ID and authorized range per a user type as shown in FIG. 24D.

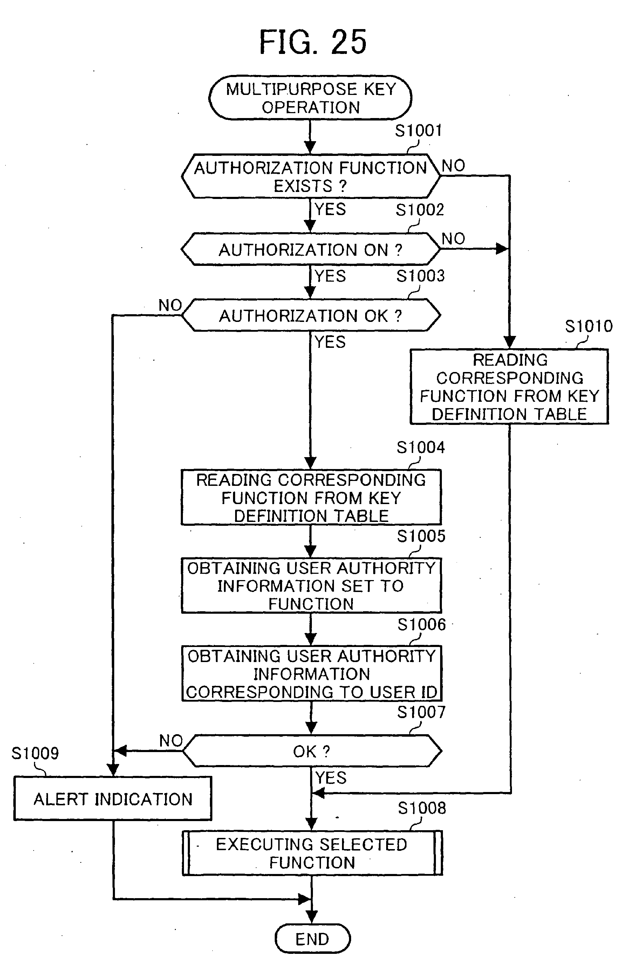

FIG. 25 illustrates an exemplary operation executed with reference to the user type information table when any one of the multipurpose keys UK1 to UK8 of the network facsimile FXa is operated, and then a standby screen is displayed.

It is initially checked if a network authorization function is included in the network communication system in step S1001. If the determination of step S1001 is positive, it is further checked if a condition that a network authorization function is used has been set in step S1002.

If the condition has been set, i.e., the determination in step S1002 is positive, it is checked if an operating user is authorized by the network authorization function in step S1003.

If the determination of step S1003 is positive, an operational function defined by the key definition information registered and allocated to the operated one of multipurpose keys UK1 to UK8 is read from the key definition table in step S1004.

User type information corresponding to the operational function is then obtained from the user type table in step S1005?.

Then, a user type information corresponding to the user ID input to a user ID input request screen is obtained from the user type information table in step S1006. Then, it is checked if the operating user is permitted to use the operational function by taking a match therebetween in step S1007.

If the determination in step S1007 is positive, the operational function is executed in step S1008. Thus, the multipurpose keys UK1 to UK8 can be efficiently used.

In contrast, one of when the operational user is not permitted to use the operational function, i.e., the determination in step S1007 is negative, and when the operating user skips authorization, and accordingly a general user is set as an operating user, i.e., the determination in step S1003 is negative, an alert message is displayed on the LCD 27j in step S10069, and the operation of the one of multipurpose keys UK1 to UK8 is neglected at the time.

Further, one of when the above-mentioned condition has not been set, i.e., the determination in step S1002 is negative, and the network authorization function is excluded in the network communication system, i.e., the determination in step S1001 is negative, the operating user is permitted to use the multipurpose keys UK1 to UK8 in a prescribed restricted range.

Specifically, an operational function defined by a key definition information registered and allocated to the one of multipurpose keys UK1 to UK8 is read from the key definition table in step S1010. Then, the process goes to step S1008, and the operational function is executed.

Even though, the present invention employs the network facsimile, other communications apparatuses such as a complex networking machine, etc., can be similarly employed.

### ADVANTAGES OF THE INVENTION

According to the present invention, since user authorization is required when executing one or more operational functions allocated to the multipurpose keys, usability of a communication apparatus can be improved. Since operation of a multipurpose key is validated or invalidated depending upon an operation function, a usage manner can be wide-ranging, and usability can be improved. Since a user authority information as if operation of one or more multipurpose keys is validate or invalidated is referred to at the time of user authorization, usage manner of the communication apparatus can be wide ranging, and a usage manner can be readily set as a supervisory user desires. Further, since a general user can use the multipurpose key, even if he or she skips user authorization, usability is significantly improved.

## Claims

1. A communications apparatus, comprising:
at least two multipurpose keys each configured to allow designation of an operational function separately allocated thereto;
means for performing a network communication function operative to execute data communications via a network;
authorization means selectively employed in the communications apparatus and configured to designate an authorization function to authorize a user;
wherein the authorization means is used when employed and the user starts operating any one of the at least two multipurpose keys, and
**characterized by** a key definition table configure to store at least one block of key definition information defining at least two operational functions allocated to the at least two multipurpose keys per a user; and
an operational means configured to perform an operation function allocated to the operated one of the multipurpose keys specified from the key definition table based upon a user ID identified through authorization from the authorization means.

2. A communications apparatus according to claim 1 further comprising:
a validity table configured to include validity information per each of the at least two operational functions, said validity information represents that one of the at least two operational functions designated by the user authorized by the authorization function is either invalidated and neglected or validated depending upon a type of an operational function wherein the operational function is executed if described valid in the validity information.

3. The communication apparatus according to either claim 1 or claim 2,
wherein the user is categorized into a general user when the user skipped the authorization,
wherein at least two operational functions allocated to the at least two multipurpose keys to be operated by the general user are included in the key definition table, and
wherein a number of said at least two operational functions is smaller than that used by a user having obtained the authorization.

4. A communication system comprising a communications apparatus according to claim 3, wherein a network server is connected to the network and configured to perform the authorization upon receiving a request from the communications apparatus.

5. A communication system comprising a communications apparatus according to claim 3, wherein said authorization is executed one of by locally and remotely.

## Patentansprüche

1. Eine Kommunikationsvorrichtung, die Folgendes beinhaltet:
wenigstens zwei Mehrzwecktasten, die jeweils konfiguriert sind, um die Zuweisung einer Betriebsfunktion, die dazu getrennt zugeteilt wird, zu gestatten;
Mittel zur Durchführung einer Netzwerkkommunikationsfunktion, die funktionsfähig ist, um Datenkommunikationen über ein Netzwerk auszuführen;
Autorisierungsmittel, das ausgewählt in der Kommunikationsvorrichtung eingesetzt wird und konfiguriert ist, um eine Autorisierungsfunktion zu bestimmen, um einen Benutzer zu autorisieren;
wobei das Autorisierungsmittel verwendet wird, wenn es eingesetzt wird und der Benutzer anfängt, irgendeine der wenigstens zwei Mehrzwecktasten zu betätigen, und
**gekennzeichnet durch** eine Tastendefinitionstabelle, die konfiguriert ist, um wenigstens einen Block von Tastendefinitionsinformationen zu speichern, der wenigstens zwei betriebsfähige Funktionen definiert, die den wenigstens zwei Mehrzwecktasten zugewiesen sind, und zwar pro Benutzer bzw, **durch** einen Benutzer; und
ein Betriebsmittel, das konfiguriert ist, um eine Betriebsfunktion, die der bedienten der Mehrzwecktasten, die aus der Tastendefinitionstabelle spezifiziert ist, zugewiesen ist, basierend auf einer Benutzer-ID, die **durch** Autorisierung von dem Autorisierungsmittel identifiziert wird, durchzuführen.

2. Eine Kommunikationsvorrichtung gemäß Anspruch 1, die ferner beinhaltet:
eine Gültigkeitstabelle, die konfiguriert ist, Gültigkeitsinformationen für jede der wenigstens zwei Betriebsfunktionen zu beinhalten, wobei die genannten Gültigkeitsinformationen repräsentieren, dass eine der wenigstens zwei Betriebsfunktionen, die von dem Benutzer, der von der Autorisierungsfunktion autorisiert wird, bestimmt wird, entweder entwertet und nicht beachtet oder validiert wird, abhängig von einem Typ einer Betriebsfunktion, wobei die Betriebsfunktion ausgeführt wird, wenn sie als gültig in den Gültigkeitsinformationen beschrieben wird.

3. Das Kommunikationsgerät gemäß entweder Anspruch 1 oder Anspruch 2,
wobei der Benutzer als allgemeiner Benutzer kategorisiert wird, wenn der Benutzer die Autorisierung übergangen hat,
wobei wenigstens zwei Betriebsfunktionen, die den wenigstens zwei Mehrzwecktasten zugewiesen sind, die von dem allgemeinen Benutzer bedient werden sollen, in der Tastendefinitionstabelle beinhaltet sind, und
wobei eine Anzahl der genannten wenigstens zwei Betriebsfunktionen kleiner ist als die Anzahl, die von einem Benutzer verwendet wird, der die Autorisierung erhalten hat,

4. Ein Kommunikationssystem, das eine Kommunikationsvorrichtung gemäß Anspruch 3 beinhaltet, wobei ein Netzwerkserver mit einem Netzwerk verbunden ist und konfiguriert ist, um die Autorisierung auf Erhalt einer Anfrage von der Kommunikationsvorrichtung durchzuführen.

5. Ein Kommunikationssystem, das eine Kommunikationsvorrichtung gemäß Anspruch 3 beinhaltet, wobei die genannte Autorisierung entweder lokal oder auf die Ferne durchgeführt wird.

## Revendications

1. Appareil de communication, comprenant :
au moins deux touches multifonction dont chacune est configurée pour permettre la désignation d'une fonction opérationnelle qui lui est allouée de façon séparée ;
un moyen pour réaliser une fonction de communication de réseau opérant pour exécuter des communications de données via un réseau ;
un moyen d'autorisation qui est utilisé de façon sélective dans l'appareil de communication et qui est configuré pour désigner une fonction d'autorisation pour autoriser un utilisateur,
dans lequel le moyen d'autorisation est utilisé lorsqu'il est employé et que l'utilisateur démarre un actionnement de l'une quelconque des au moins deux touches multifonction ; et
**caractérisé par** une table de définitions de touche qui est configurée pour stocker au moyen un bloc d'information de définition de touche qui définit au moins deux fonctions opérationnelles allouées aux au moins deux touches multifonction par utilisateur ; et
un moyen opérationnel configuré pour réaliser une fonction d'opération allouée à celle actionnée des touches multifonction comme spécifié à partir de la table de définitions de touche sur la base d'une ID d'utilisateur qui est identifiée par l'intermédiaire d'une autorisation en provenance du moyen d'autorisation.

2. Appareil de communication selon la revendication 1, comprenant en outre :
une table de validité qui est configurée de manière à inclure une information de validité pour chacune des au moins deux fonctions opérationnelles, ladite information de validité représentant que celle des au moins deux fonctions opérationnelles désignée par l'utilisateur qui est autorisé par la fonction d'autorisation est soit invalidée et négligée, soit validée en fonction d'un type d'une fonction opérationnelle où la fonction opérationnelle est exécutée si elle est décrite comme étant valide dans l'information de validité.

3. Appareil de communication selon la revendication 1 ou 2, dans lequel :
l'utilisateur est classifié selon un utilisateur général lorsque l'utilisateur a sauté l'autorisation, dans lequel
au moins deux fonctions opérationnelles allouées aux au moins deux touches multifonction à actionner par l'utilisateur général sont incluses dans la table de définitions de touche ; et dans lequel
un nombre desdites au moins deux fonctions opérationnelles est inférieur au nombre de fonctions utilisées par un utilisateur qui a obtenu l'autorisation.

4. Système de communication comprenant un appareil de communication selon la revendication 3, dans lequel un serveur de réseau est connecté au réseau et est configuré pour réaliser l'autorisation suite à la réception d'une requête en provenance de l'appareil de communication.

5. Système de communication comprenant un appareil de communication selon la revendication 3, dans lequel ladite autorisation est exécutée soit localement, soit à distance.
